# EUROPÄISCHE PATENTSCHRIFT

(11) **EP 4 025 929 B1**
(45) Veröffentlichungstag und Bekanntmachung des Hinweises auf die Patenterteilung: **19.08.2026**
(21) Anmeldenummer: 20764632.4
(22) Anmeldetag: 28.08.2020
(51) Int. Cl.: G01S 13/931, G01S 13/86, G01S 7/35, G01S 7/41, G06F 18/25, G06V 20/58, G01S 7/40

(54) **VERFAHREN ZUM BETRIEB EINES ABBIEGEASSISTENZSYSTEMS, ABBIEGEASSISTENZSYSTEM UND KRAFTFAHRZEUG MIT EINEM DERARTIGEN ABBIEGEASSISTENZSYSTEM**
METHOD FOR OPERATING A TURNING ASSISTANCE SYSTEM, A TURNING ASSISTANCE SYSTEM, AND MOTOR VEHICLE HAVING A TURNING ASSISTANCE SYSTEM OF THIS KIND
PROCÉDÉ POUR FAIRE FONCTIONNER UN SYSTÈME D'AIDE AU VIRAGE, SYSTÈME D'AIDE AU VIRAGE ET VÉHICULE AUTOMOBILE ÉQUIPÉ D'UN TEL SYSTÈME D'AIDE AU VIRAGE

(30) Priorität: 04.09.2019 DE 102019006243
(43) Veröffentlichungstag der Anmeldung: 13.07.2022
(73) Patentinhaber: MAN Truck & Bus SE, 80995 München (DE)
(72) Erfinder: BRAUN, Reimar, 80995 München (DE)
(74) Vertreter: v. Bezold & Partner Patentanwälte - PartG mbB
(86) Internationale Anmeldenummer: PCT/EP2020/074061
(87) Internationale Veröffentlichungsnummer: WO 2021/043676

(56) Entgegenhaltungen:
- WO-A1-2019/090276
- DE-A1- 102009 041 557
- DE-A1- 102014 009 869
- DE-U1- 202013 008 112
- US-A1- 2014 172 239
- US-A1- 2018 067 490
- US-A1- 2018 105 182

## Beschreibung

Die Erfindung betrifft ein Verfahren zum Betrieb eines Abbiegeassistenzsystems, ein Abbiegeassistenzsystem sowie ein Kraftfahrzeug mit einem derartigen Abbiegeassistenzsystem.

Um den Fahrkomfort, die Wirtschaftlichkeit und/oder die Sicherheit bei Kraftfahrzeugen zu erhöhen, ist es im Stand der Technik bekannt, Fahrzeuge mit Fahrerassistenzsystemen, wie z. B. Abbiege- oder Einparkassistenten, auszustatten.

Beispielsweise offenbart die DE 20 2013 008 112 U1 ein Fahrerassistenzsystem für ein Kraftfahrzeug, aufweisend eine Ausgabevorrichtung ausgebildet zum Ausgeben von Abbiegehinweisen für Abbiegevorgänge des Kraftfahrzeugs, eine Recheneinheit und ein Computerprogrammprodukt, das, wenn es auf der Recheneinheit ausgeführt wird, die Recheneinheit anleitet, folgende Schritte auszuführen: Ermitteln zumindest eines ein momentanes Fahrverhalten eines Fahrers des Kraftfahrzeugs kennzeichnenden Parameters, Klassifizieren des momentanen Fahrverhaltens des Fahrers basierend auf dem zumindest einen ermittelten Parameter, Ermitteln, ob ein Abbiegevorgang des Kraftfahrzeugs von einer momentan von dem Kraftfahrzeug befahrenen ersten Fahrbahn auf eine die erste Fahrbahn querende zweite Fahrbahn bevorsteht, und falls ermittelt wird, dass ein Abbiegevorgang des Kraftfahrzeugs bevorsteht, Ermitteln eines Mindestabstandswerts des Kraftfahrzeugs zu einem auf der zweiten Fahrbahn befindlichen Verkehrsteilnehmer, wobei der Mindestabstandswert in Abhängigkeit des klassifizierten momentanen Fahrverhaltens des Fahrers ermittelt wird, Ausgeben eines Abbiegehinweises mittels der Ausgabevorrichtung basierend auf dem ermittelten Mindestabstandswert.

Weiterhin sind aus der WO 2019/090276 A1 ein Verfahren und Systeme zur Ferndetektion von Objekten bekannt, die eine kodierte Sensorfusion beinhalten. In einigen Ausführungsvarianten kann ein erster Satz von erfassten Daten mit einem ersten Objektsensor und ein zweiter Satz von erfassten Daten mit einem zweiten Objektsensor erzeugt werden. Ein Objekt kann dann unter Verwendung der erfassten Daten des ersten Objektsensors erkannt werden. Nach der Erkennung des Objekts anhand der erfassten Daten des ersten Objektsensors kann eine dem zweiten Objektsensor zugeordnete Einstellung geändert werden, um die Wahrscheinlichkeit der Erkennung des Objekts anhand des zweiten Satzes erfasster Daten des zweiten Objektsensors zu erhöhen.

Ferner offenbart die DE 10 2014 009 869 A1 ein Verfahren zum Betrieb eines Radarsensors in einen Kraftfahrzeug, wobei eine wenigstens einen Betriebsparameter des Radarsensors beschreibende Einstellungsinformation in Abhängigkeit von einer durchzuführenden Funktion eines Fahrzeugsystems des Kraftfahrzeugs und/oder des aktuellen Betriebszustands des Kraftfahrzeugs von einem Steuergerät des Kraftfahrzeugs ermittelt und an den Radarsensor übertragen wird, wo eine Steuereinheit den wenigstens einen Betriebsparameter entsprechend der Einstellungsinformation anpasst. Dabei wird ein zentrales Steuergerätverwendet, in dem die Sensordaten einer Mehrzahl von Sensoren eines Kraftfahrzeugs, deren Sensordaten von Funktionen einer Mehrzahl von Fahrzeugsystemen benötigt werden, für die Funktionen aufbereitet werden, und das die Funktionen ausführt, wobei in einem Ermittlungsmodul des Steuergeräts die Einstellungsinformation auf Basis der Anforderungen wenigstens eines Teils der Funktionen ermittelt wird.

Die hierfür von den Assistenzsystemen benötigten Informationen bezüglich des Fahrzeugumfeldes bzw. bezüglich sich dort befindlicher Objekte werden dabei üblicherweise von verschiedenen Sensoreinrichtungen, darunter z. B. elektromagnetische (Radar), akustische (Ultraschall) und/oder optische (Lidar, Infrarot, Laser) Sensoren und/oder videobasierte Sensoreinrichtungen, wie Kameras und/oder Bird-View-Systeme, erfasst.

Da die verwendeten Sensorarten zum Teil auf unterschiedlichen Wirkprinzipien beruhen, weisen die einzelnen Sensoreinrichtungen typspezifische Vor- und Nachteile auf. So ermöglichen z. B. Radarsensoren bei jedem Wetter ein zuverlässiges Erkennen des Abstands und/oder der Geschwindigkeit eines Objekts, liefern allerdings keine Farb- und oftmals nur ungenügende Forminformationen. Bilderfassungseinrichtungen, wie Kameras, hingegen haben zwar eine große Reichweite und erkennen Farben, allerdings wird deren Erfassung leicht z. B. durch Nebel und/oder Verschmutzungen beeinträchtigt und sie unterliegen optischen Täuschungen. Für ein möglichst zuverlässiges Erfassen des Fahrzeugumfelds besteht daher ein Bedarf an einer Lösung, mit der die spezifischen Nachteile der einzelnen Sensortypen möglichst ausgeglichen werden können.

Speziell im Fall von Abbiegeassistenten - welche den Fahrer des Kraftfahrzeugs warnen, wenn diese beim Abbiegen Fußgänger und/oder Radfahrer gefährden würden - wird die vorgenannte Problematik nochmals dadurch verkompliziert, falls sich zusätzliche Hindernisse, darunter z. B. parkende Fahrzeuge und/oder Litfaßsäulen, im Erfassungsbereich der Sensoren befinden. So kann gerade im Fall von in diesem Zusammenhang typischerweise verwendeten Radarsensoren (Seiten bzw. Corner-Radar) die starke Rückstreuung dieser Objekte ein zuverlässiges Erkennen von Fußgängern und/oder Radfahrern - mit im Vergleich dazu deutlich kleinerer Rückstreufläche - stark behindern und/oder erschweren.

Entsprechend ist es daher eine Aufgabe der Erfindung eine Lösung bereitzustellen, mit der im Vergleich zu den bisherigen Abbiegeassistenzsystemen ein verbessertes bzw. zuverlässigeres Erkennen von beim Abbiegen möglicherweise gefährdeten Objekten (z. B. Fußgänger und/oder Radfahrer), erreicht werden kann. Insbesondere ist es dabei eine Aufgabe der Erfindung eine Lösung bereitzustellen, mittels der beim Abbiegen des Kraftfahrzeugs die Sicherheit für diese Personen erhöht werden kann, wenn sich zudem weitere - ggf. die Personen abschattende - Hindernisse (z. B. parkende Fahrzeuge) in der Umgebung des Kraftfahrzeugs befinden.

Diese Aufgaben werden durch ein Verfahren, ein Abbiegeassistenzsystem und ein Kraftfahrzeug mit den Merkmalen der unabhängigen Ansprüche gelöst. Vorteilhafte Ausführungsformen und Anwendungen der Erfindung sind Gegenstand der abhängigen Ansprüche und werden in der folgenden Beschreibung unter teilweiser Bezugnahme auf die Figuren näher erläutert.

Der Grundgedanke der beanspruchten Lösung basiert hierbei darauf, dass die Betriebsweise einer Sensoreinrichtung (z. B. ein Corner-Radar) zur Erfassung möglicherweise gefährdeter Personen und/oder Radfahrern beim Abbiegen auf Basis von Informationen einer weiteren Sensoreinrichtung (z. B. einer Fahrzeugkamera) angepasst wird. So kann z. B. falls die Fahrzeugkamera ein oder mehrere parkende Fahrzeuge im Seitenbereich des abbiegenden Fahrzeugs erkennt, der Fokus bei der Erfassung anderer Verkehrsteilnehmer im Besonderen auf einen - aus Sicht des Fahrers - hinter diesen parkenden Fahrzeugen liegenden Bereich gerichtet werden.

Hierzu wird ein Verfahren zum Betrieb eines Abbiegeassistenzsystems für ein Kraftfahrzeug bereitgestellt, wobei das Kraftfahrzeug zumindest zwei Sensoreinrichtungen zur Umfelderfassung umfasst. Diese beiden Sensoreinrichtungen sollen dabei nachfolgend zur besseren Unterscheidbarkeit als "erste Sensoreinrichtung" und "zweite Sensoreinrichtung" bezeichnet werden. Bevorzugt handelt es sich bei der ersten Sensoreinrichtung um eine Bilderfassungseinrichtung, z. B. eine Frontsichtkamera, und/oder bei der zweiten Sensoreinrichtung um eine Radareinrichtung, wie z. B. ein Corner-Radar. Weiterhin weist das Verfahren die folgenden Schritte auf:
- Erfassen erster Umfelddaten des Kraftfahrzeugs mittels der ersten Sensoreinrichtung, wobei als "Umfelddaten" Sensordaten verstanden werden können, welche das Umfeld des Kraftfahrzeugs, insbesondere in Hinblick auf mögliche Hindernisse und/oder andere Verkehrsteilnehmer, beschreiben.
- Ermitteln von Objekten im Umfeld des Kraftfahrzeugs auf Basis der erfassten ersten Umfelddaten. Mit anderen Worten soll eine Objekterkennung im Umfeld des Kraftfahrzeugs auf Basis der ersten Umfelddaten erfolgen, wobei hierfür an sich im Stand der Technik bekannte Methoden der Muster- bzw. Objekterkennung verwendet werden können.
- Falls hierbei zumindest ein vorbestimmter, d. h. zuvor festgelegter, stationärer Objekttyp (z. B. ein parkendes Fahrzeug) in einem vorbestimmten ersten Umfeldbereich (z. B. in einem beifahrerseitigen Seitenbereich) des Umfelds des Kraftfahrzeugs ermittelt wird, Anpassen wenigstens einer Detektionseigenschaft (z. B. eine Sensitivität) der zweiten Sensoreinrichtung bezüglich eines vorbestimmten, von der zweiten Sensoreinrichtung weiter als der erste Umfeldbereich entfernten, zweiten Umfeldbereichs des Umfelds des Kraftfahrzeugs. D. h. anders ausgedrückt kann die Betriebsweise der zweiten Sensoreinrichtung auf Basis der von der ersten Sensoreinrichtung erfassten Informationen angepasst werden.

Insgesamt kann durch das vorgenannte Zusammenspiel der beiden Sensoreinrichtungen auf vorteilhafte Weise ein zuverlässiges Erkennen von, gegebenenfalls durch die stationären Objekte verdeckten, anderen Verkehrsteilnehmern, darunter Fußgänger und Radfahrer, realisiert werden. Bevorzugt handelt es sich bei dem vorbestimmten ersten Umfeldbereich dabei um einen Nahbereich des Umfelds des Kraftfahrzeugs, z. B. um einen Bereich, der maximal 3 m vom Kraftfahrzeug und/oder einer der Sensoreinrichtungen entfernt ist. Der zweite Umfeldbereich soll hingegen bevorzugt ein davon weiter entfernter Bereich des Umfelds des Kraftfahrzeugs sein, z. B. einen Bereich, der 3 m bis 6 m vom Kraftfahrzeug und/oder einer der Sensoreinrichtungen entfernt ist.

Gemäß einem ersten Aspekt der Erfindung kann das Anpassen der wenigstens einen Detektionseigenschaft ein Erhöhen einer Detektionswahrscheinlichkeit für dynamische Objekte (z. B. Fußgänger und/oder Radfahrer) im zweiten Umfeldbereich umfassen. Anders ausgedrückt kann gemäß diesem Aspekt die Wahrscheinlichkeit, mit der ein sich bewegendes Objekt im zweiten Umfeldbereich erfasst wird, gesteigert werden. Dies kann beispielsweise durch ein Anpassen entsprechender Schwellenwerte der Sensoreinrichtung und/oder einer zugehörigen Auswerteeinheit erfolgen und kann z. B. durch einfache experimentelle Vorversuche (mehrfaches Durchfahren mit veränderten Einstellungen) ermittelt werden. Zudem oder alternativ kann das Anpassen der wenigstens einen Detektionseigenschaft auch ein Erhöhen einer Sensitivität für dynamische Objekte (z. B. Fußgänger und/oder Radfahrer) im zweiten Umfeldbereich umfassen. Wie vorstehend beschrieben kann auch das Erhöhen der Sensitivität bzw. Empfindlichkeit z. B. durch einfache Testreihen im Vorfeld ermittelt werden. Auf vorteilhafte Weise kann dadurch insgesamt eine bedarfsgerechte Nutzung der vorhandenen Sensoren erreicht werden und gleichzeitig das Risiko für ein Übersehen potentiell gefährdeter Personen beim Abbiegevorgang reduziert werden.

Nach einem weiteren Aspekt der Erfindung kann die zweite Sensoreinrichtung insbesondere eine Radareinrichtung sein. Unter dem Ausdruck "Radareinrichtung" kann hierbei eine entsprechende Sende- und/oder Empfangseinheit für Radarsignale verstanden werden, wobei die Radareinrichtung auch mehrere derartiger Einheiten aufweisen kann. Beispielsweise kann die Radareinrichtung ein, vorzugsweise beifahrerseitiges, Seitenradar und/oder ein, vorzugsweise beifahrerseitiges, Corner-Radar umfassen. Um hierbei auf vorteilhafte Weise die Erfassung möglicher gefährdeter Personen im zweiten Umfeldbereich zu verbessern, kann das Anpassen der wenigstens einen Detektionseigenschaft ferner ein Ändern einer räumlichen Verteilung, einer Frequenz und/oder einer Amplitude eines abgestrahlten Radarsignals umfassen. Mit anderen Worten kann das Anpassen der wenigstens einen Detektionseigenschaft auch ein Ändern der Abstrahlcharakteristik der zweiten Sensoreinrichtung umfassen. So kann das Radarsignal gezielt nur auf einen bestimmten, z. B. aus Sicht des Fahrers hinter dem vorbestimmten stationären Objekttyp liegenden, Raumbereich gerichtet werden und/oder die von der Radareinrichtung abgestrahlte Leistung reduziert werden, falls zuvor ein möglicherweise stark rückstreuendes vorbestimmtes stationäres Objekt im Nahbereich ermittelt wurde.

Hierbei kann der zumindest eine vorbestimmte stationäre Objekttyp beispielsweise ein parkendes Fahrzeug und/oder eine Reihe parkender Fahrzeuge sein. In diesem Fall kann dann das Anpassen der wenigstens einen Detektionseigenschaft ein Reduzieren der Amplitude des von der Radareinrichtung abgestrahlten Radarsignals umfassen. Zudem oder alternativ kann das Anpassen der wenigstens einen Detektionseigenschaft auch ein Priorisieren eines Erfassens von Objekten, die eine geringere Rückstreuung als das zumindest eine parkende Fahrzeug und/oder die Reihe parkender Fahrzeuge aufweisen, umfassen. D. h. mit anderen Worten kann eine Betriebsweise der zweiten Sensoreinrichtung gezielt auf das Detektieren von Objekten mit einer kleineren Rückstreufläche als der zuvor ermittelte stationäre Objekttyp ausgebildet sein.

Um ferner auf vorteilhafte Weise eine möglichst bedarfsgerechte und damit effiziente Nutzung der im Kraftfahrzeug vorhandenen Sensoreinrichtungen zu ermöglichen, kann gemäß einem weiteren Aspekt der Erfindung das Verfahren nur im Falle eines aktuellen, anstehenden und/oder geplanten Abbiegevorgangs des Kraftfahrzeugs durchgeführt werden. Ob hierbei eine der vorgenannten Situationen vorliegt, kann dabei z. B. anhand eines Lenkeinschlags, einer Betätigung und/oder Aktivierung eines Fahrtrichtungsanzeigers, eines Erfassens einer aktuellen Fahrspur (Abbiegespur) und/oder anhand von Daten eines Navigationssystems des Kraftfahrzeugs ermittelt werden. Beispielsweise kann anhand des Lenkeinschlags auf einen aktuellen und/oder anhand des Befahrens einer Abbiegespur auf einen anstehenden Abbiegevorgang geschlossen werden.

Nach einem weiteren Aspekt der Erfindung kann der erste Umfeldbereich ein Nahbereich des Umfelds des Kraftfahrzeugs sein, z. B. ein Bereich bis zu einem maximalen Abstand von 3 m vom Kraftfahrzeug sein. Zudem oder alternativ kann der erste Umfeldbereich auch ein, vorzugsweise beifahrerseitiger, Seiten-Nahbereich des Umfelds des Kraftfahrzeugs sein.

Erfindungsgemäß umfasst der erste Umfeldbereich zumindest abschnittsweise einen seitlich neben dem Kraftfahrzeug befindlichen Raumbereich.

Zudem oder alternativ kann der erste Umfeldbereich auch ein, vorzugsweise beifahrerseitiger, vorderer Seiten-Nahbereich des Umfelds des Kraftfahrzeugs sein. Auf vorteilhafte Weise ermöglicht gerade das Sensieren dieser Bereiche ein zuverlässiges Ermitteln stationärer Objekttypen, die potentiell andere Verkehrsteilnehmer beim Abbiegevorgang verdecken könnten.

Ferner kann - zudem oder alternativ - der erste Umfeldbereich auch zwischen dem zweiten Umfeldbereich und der zweiten Sensoreinrichtung angeordnet sein. Anders ausgedrückt können die Raumelemente des ersten Umfeldbereichs im Mittel näher am Kraftfahrzeug und/oder an der zweiten Sensoreinrichtung liegen als die Raumelemente des zweiten Umfeldbereichs. Zudem oder alternativ kann der zweite Umfeldbereich auch einen größeren Abstand zum Kraftfahrzeug und/oder zur zweiten Sensoreinrichtung aufweisen als der erste Umfeldbereich. Letzteres Merkmal kann dabei nur einen Teilbereich des zweiten Umfeldbereichs oder aber den gesamten zweiten Umfeldbereich betreffen. Zudem oder alternativ kann der zweite Umfeldbereich auch einen Bereich außerhalb der vom Kraftfahrzeug befahrenen Fahrbahn (z. B. einen dazu angrenzenden Geh- und/oder Radweg) umfassen. Dabei kann zur Festlegung des zweiten Umfeldbereichs das Verfahren ferner z. B. auch ein Ermitteln des Fahrbahnverlaufs auf Basis der erfassten ersten Umfelddaten umfassen. Insgesamt kann dadurch auf vorteilhafte Weise eine verlässliche Überwachung besonders sicherheitskritischen Bereiche erzielt werden.

Gemäß einem weiteren Aspekt der Erfindung kann der zumindest eine vorbestimmte, d. h. zuvor festgelegte, stationäre Objekttyp ein parkendes Fahrzeug, eine Bepflanzung, ein Baum, eine Litfaßsäule, ein Strommast, ein Telefonmast, ein Verkehrsschild, eine Leitbarke, und/oder eine Schutzplanke sein. Neben der Festlegung einzelner unbeweglicher Objekte als vorbestimmter stationäre Objekttyp kann dieser - zudem oder alternativ - auch eine Gruppe von Gegenständen (z. B. eine Reihe parkender Fahrzeuge, eine Baumreihe, eine Arbeitsstellensicherung etc.) und/oder eine bestimmte Umfeldszene (z. B. eine Straßenbaustelle) sein. Mit anderen Worten kann als stationärer Objekttyp jegliche Ein- oder Mehrzahl von Hindernissen festgelegt sein, die grundsätzlich geeignet sind, beim Abbiegevorgang mögliche andere, vorzugsweise auf der Beifahrerseite befindliche, Verkehrsteilnehmer, insbesondere Fußgänger und/oder Radfahrer, zu verdecken.

Um dabei die Erfassung derartiger Personen im zweiten Umfeldbereich noch weiter zu verbessern, kann nach einem weiteren Aspekt der Erfindung das Anpassen der wenigstens einen Detektionseigenschaft auch ein zumindest teilweises Herausrechnen und/oder Herausfiltern einer zu erwartenden Signalcharakteristik des ermittelten zumindest einen vorbestimmten stationären Objekttyps im ersten Umfeldbereich des Umfelds des Kraftfahrzeugs umfassen. Wird beispielsweise von der ersten Sensoreinrichtung (z. B. eine Bilderfassungseinrichtung) ein, in einem bestimmten Abstand vom Kraftfahrzeug parkender, Fahrzeugtyp ermittelt, so kann - gemäß dieser Variante - die zu erwartende Signatur dieses Objekts in den Umfelddaten der zweiten Sensoreinrichtung (z. B. Radareinrichtung) zumindest teilweise eliminiert werden. Die zu erwartende Signalcharakteristik kann hierbei in Abhängigkeit der verwendeten zweiten Sensoreinrichtung z. B. mittels entsprechender Vorversuche experimentell ermittelt werden und/oder auf Basis entsprechender Modelle simuliert werden. So kann z. B. für jeden der vorbestimmten Objekttypen sogleich auch eine zu erwartende Signalcharakteristik bzw. Signatur dieser Objekte in einem Speicher hinterlegt werden. Durch das Herausrechnen bzw. Herausfiltern der Signatur der stationären Objekttypen kann z. B. auf vorteilhafte Weise die Empfindlichkeit für dynamische Objekte im Erfassungsbereich erhöht werden.

Gemäß einem weiteren Aspekt der Erfindung kann die zweite Sensoreinrichtung in zumindest zwei verschiedene Betriebsmodi M₁, M₂, betreibbar sein, wobei sich diese in wenigstens einer Detektionseigenschaft bezüglich dem vorbestimmten zweiten Umfeldbereich des Umfelds des Kraftfahrzeugs unterscheiden sollen. Bevorzugt handelt es sich bei den verschiedenen Betriebsmodi M₁, M₂ hierbei um verschiedene Betriebsweisen bei einem tatsächlichen Betrieb der zweiten Sensoreinrichtung und nicht lediglich um ein Ein- und Ausschalten dieser. Beispielsweise kann die wenigstens eine Detektionseigenschaft, in der sich die verschiedenen Betriebsmodi M₁, M₂ unterscheiden, eine Detektionswahrscheinlichkeit, eine Sensitivität, eine Auflösung und/oder ein Messbereich sein. In diesem Zusammenhang kann der Schritt des Anpassens ein Festlegen eines aktuellen Betriebsmodus Mₐₖₜ aus den zumindest zwei Betriebsmodi M₁, M₂ umfassen. Mit anderen Worten kann für die zweite Sensoreinrichtung ein bestimmter aktueller Betriebsmodus Mₐₖₜ aus den zumindest zwei Betriebsmodi M₁, M₂ ausgewählt und eingestellt werden. Dies kann dabei deterministisch oder in Abhängigkeit der zuvor ermittelten Objekttypen erfolgen. Der Vorteil des Vorhandenseins definierter Betriebsmodi liegt hierbei darin, dass dadurch auf schnelle Weise zwischen den verschiedenen Einstellungen gewechselt werden kann.

Hierbei kann der festgelegte aktuelle Betriebsmodus Mₐₖₜ insbesondere auf das Erkennen dynamischer Objekte, darunter z. B. Fußgänger und/oder Radfahrer, ausgelegt und/oder optimiert sein. Zudem oder alternativ kann der festgelegte aktuelle Betriebsmodus Mₐₖₜ grundsätzlich auf das Erkennen von Fußgängern und/oder Radfahrern ausgelegt und/oder optimiert sein. Beispielsweise können hierzu typische Signaturen (z. B. die Form und/oder Größe der Rückstreufläche) und/oder typische Bewegungsmuster dieser Objekte genutzt werden, die wiederum mittels entsprechender Vorversuche ermittelt werden können. Anders ausgedrückt sollen mittels des aktuellen Betriebsmodus Mₐₖₜ mit einer möglichst hohen Wahrscheinlichkeit derartige Objekte erkannt werden können.

Nach einem weiteren Aspekt der Erfindung kann die erste Sensoreinrichtung eine Bilderfassungseinrichtung, wie z. B. eine Frontsichtkamera, sein oder mehrere Bilderfassungseinrichtungen umfassen. Beispielsweise kann im letzteren Fall die erste Sensoreinrichtung ein Bird-view-System und/oder Teil eines Birdview-Systems sein. Der Vorteil dieser Variante liegt hierbei darin, dass sich die von derartigen Sensoreinrichtungen gewonnen Bilddaten in besonderem Maße zum verlässlichen Erkennen der Objekttypen bzw. Objektklassen im Fahrzeugumfeld, d. h. um welche Art von Gegenständen (Gebäude, Bepflanzung, Fahrzeug, Person, etc.) es sich handelt, ermöglichen.

Um auf vorteilhafte Weise ferner bereits vorausschauend mögliche Hindernisse zu ermitteln, kann die erste Sensoreinrichtung zudem oder alternativ dazu ausgebildet sein, einen vorderen, seitlichen Umfeldbereich auf der Beifahrerseite des Kraftfahrzeugs zu erfassen. Entsprechend kann z. B. unter Mitberücksichtigung der Fahrgeschwindigkeit erst bei dem tatsächlichen Erreichen eines möglicherweise abschattenden Hindernisses ein entsprechendes Anpassen vorgenommen werden und/oder vorausschauend entsprechende Einstellungen vorgenommen werden. Zudem oder alternativ ist es auch möglich den zweiten Umfeldbereich im Voraus an das zu erwartende Objekt anzupassen.

Zudem oder alternativ kann die erste Sensoreinrichtung und zweite Sensoreinrichtung dabei auch auf einem unterschiedlichen Messprinzip beruhen. Lediglich beispielhaft kann dabei die erste Sensoreinrichtung eine Bilderfassungseinrichtung sein, wohingegen die zweite Sensoreinrichtung z. B. eine Radar- und/oder Ultraschalleinrichtung sein kann. Alternativ sind jedoch auch andere Paarungen von auf elektromagnetischen, akustischen, und/oder optischen Wirkprinzipien beruhenden Sensoren möglich. Auf vorteilhafte Weise können dadurch die spezifischen Vorteile der verschiedenen Sensorsysteme möglichst optimal genutzt werden bzw. spezifischen Nachteile der einzelnen Sensortypen möglichst ausgeglichen werden.

Weiterhin wird auch ein Abbiegeassistenzsystem für ein Kraftfahrzeug bereitgestellt, wobei das Abbiegeassistenzsystem eingerichtet ist, ein Verfahren, wie in diesem Dokument beschrieben, durchzuführen. D. h. mit andern Worten soll ein Abbiegeassistenzsystem für ein Kraftfahrzeug, umfassend eine erste Sensoreinrichtung zur Umfelderfassung und eine zweite Sensoreinrichtung zur Umfelderfassung, bereitgestellt werden. Die erste Sensoreinrichtung kann hierbei ausgebildet sein, erste Umfelddaten des Kraftfahrzeugs zu erfassen. Ferner kann das Abbiegeassistenzsystem eine Steuereinrichtung (z. B. ein Steuergerät) aufweisen, die z. B. mittels entsprechender programmtechnisch eingerichteter Mikroprozessoren realisiert sein kann. Diese Steuereinrichtung kann hierbei ferner ausgebildet sein, Objekte im Umfeld des Kraftfahrzeugs auf Basis der erfassten ersten Umfelddaten zu ermitteln. Falls dabei zumindest ein vorbestimmter stationärer Objekttyp in einem vorbestimmten ersten Umfeldbereich des Umfelds des Kraftfahrzeugs ermittelt wird, kann die Steuereinrichtung ferner dazu ausgebildet sein, wenigstens einer Detektionseigenschaft der zweiten Sensoreinrichtung bezüglich eines vorbestimmten zweiten Umfeldbereichs des Umfelds des Kraftfahrzeugs anzupassen.

Ferner wird auch ein Kraftfahrzeug, vorzugsweise ein Nutzfahrzeug, bereitgestellt, aufweisend ein Abbiegeassistenzsystem wie in diesem Dokument beschrieben.

Dabei kann gemäß einem weiteren Aspekt der Erfindung die erste Sensoreinrichtung am Kraftfahrzeug angeordnet sein, während die zweite Sensoreinrichtung an einem mit dem Kraftfahrzeug verbundenen Anhänger angeordnet sein kann. Mit anderen Worten kann die erste Sensoreinrichtung an einem Zugfahrzeug und die zweite Sensoreinrichtung an einem vom Zugfahrzeug mitgeführten Anhänger angebracht sein. Insbesondere kann das Kraftfahrzeug hierbei eine Sattelzugmaschine und der Anhänger ein Sattelauflieger sein. Der Vorteil dieser Variante liegt hierbei darin, dass der Anhänger in der Anfangsphase des Abbiegevorgangs weniger Querbewegungen unterliegt und damit ein zuverlässigeres Überwachen des Seitenbereichs ermöglicht.

Die zuvor beschriebenen Aspekte und Merkmale der Erfindung sind dabei beliebig miteinander kombinierbar. Weitere Einzelheiten und Vorteile der Erfindung werden im Folgenden unter Bezugnahme auf die beigefügten Zeichnungen beschrieben. Es zeigen:
- Figur 1:: Ein Flussdiagramm eines Verfahrens zum Betrieb eines Abbiegeassistenzsystems für ein Kraftfahrzeig gemäß einer Ausführungsform der Erfindung;
- Figur 2:: Eine schematische Darstellung eines Abbiegevorgangs eines Kraftfahrzeugs mit einem Abbiegeassistenzsystem gemäß einer Ausführung der Erfindung; und
- Figur 3:: Eine schematische Darstellung eines Abbiegevorgangs eines Kraftfahrzeugs mit einem Abbiegeassistenzsystem gemäß einer weiteren Ausführung der Erfindung

Gleiche oder funktional äquivalente Elemente sind dabei in allen Figuren mit denselben Bezugszeichen bezeichnet und zum Teil nicht gesondert beschrieben.

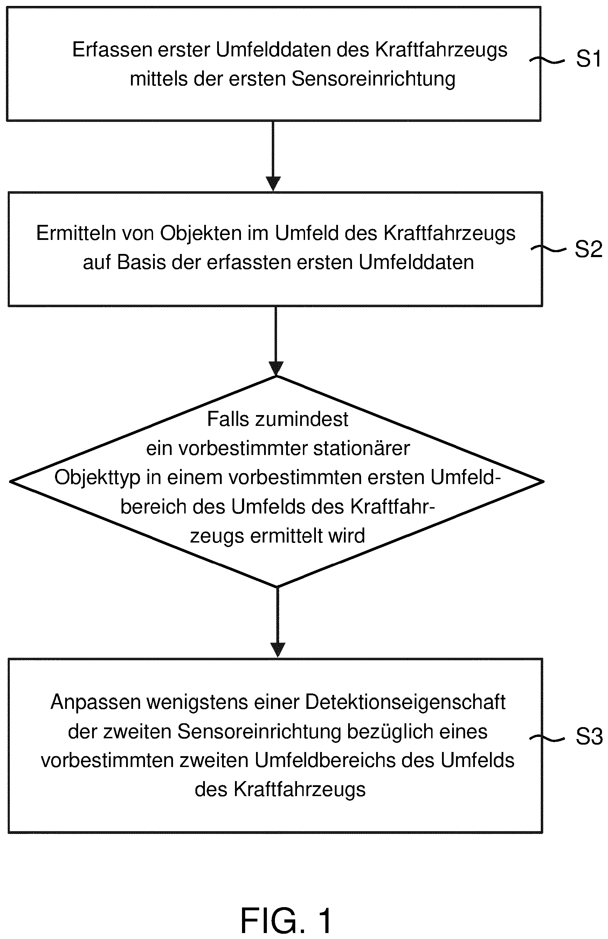

Figur 1 zeigt ein Flussdiagramm eines Verfahrens zum Betrieb eines Abbiegeassistenzsystems 10 für ein Kraftfahrzeug 20 gemäß einer Ausführungsform der Erfindung. Das Kraftfahrzeug 20 soll hierbei eine erste Sensoreinrichtung 2a zur Umfelderfassung (z. B. eine Bilderfassungseinrichtung) und eine zweite Sensoreinrichtung 2b zur Umfelderfassung (z. B. eine Radareinrichtung) umfassen. Im Schritt S1 erfolgt zunächst ein Erfassen erster Umfelddaten des Kraftfahrzeugs 20 mittels der ersten Sensoreinrichtung 2a. Beispielsweise kann es sich bei den ersten Umfelddaten um Bilddaten einer Bilderfassungseinrichtung handeln. Im Schritt S2 erfolgt anschließend ein Ermitteln von Objekten 4a, 4b, 4c im Umfeld 3 des Kraftfahrzeugs 20 auf Basis der erfassten ersten Umfelddaten. Dabei können an sich im Stand der Technik bekannte Methoden der Muster- bzw. Objekterkennung verwendet werden, die z. B. ein Identifizieren und vorzugsweise auch ein Lokalisieren von Objekten im Umfeld 3 des Kraftfahrzeugs 20 ermöglichen. Beispielsweise können hierbei Methoden, die auf einer Kanten-, Größen-, Form- und/oder Farberkennung basieren, eingesetzt werden. Zudem oder alternativ können auch Techniken des Machine-Learnings und/oder des Deep-Learnings Anwendung finden. Weiterhin können in diesem Zusammenhang zusätzlich zu den ersten Umfelddaten auch Umfelddaten weiterer Sensoren (z. B. die der zweiten Sensoreinrichtungen 2b) berücksichtigt werden, wobei ferner auch eine zentrale Fusionierung und/oder sonstige Bearbeitung der Sensordaten erfolgen kann.

Falls dabei zumindest ein vorbestimmter stationärer Objekttyp (z. B. eine Reihe parkendender Fahrzeuge oder eine Baumreihe) in einem vorbestimmten ersten Umfeldbereich 3a (z. B. in einem beifahrerseitigen Seitenbereich) des Umfelds 3 des Kraftfahrzeugs 20 ermittelt wird, erfolgt dann im Schritt S3 ein Anpassen wenigstens einer Detektionseigenschaft (z. B. Erhöhen der Sensitivität) der zweiten Sensoreinrichtung 2b bezüglich eines vorbestimmten zweiten Umfeldbereichs 3b des Umfelds 3 des Kraftfahrzeugs 20. Bevorzugt liegt der zweite Umfeldbereich 3b hierbei weiter von der zweiten Sensoreinrichtung 2b entfernt als der erste Umfeldbereich 3a. Alternativ dazu kann der zweite Umfeldbereich 3b jedoch auch zwischen dem ersten Umfeldbereich 3a und der zweiten Sensoreinrichtung 2b angeordnet sein. Letzteres ist z. B. gerade dann vorteilhaft, falls sich ein beifahrerseitig neben dem Kraftfahrzeug 20 fahrender Radfahrer zwischen dem Kraftfahrzeug 20 und einer parkenden Fahrzeugreihe befindet. In diesem Fall würde beim bislang üblichen Einsatz von Radarsensoren zur Objekterfassung (ohne Anpassung) ein Erkennen des Radfahrers durch die starke Rückstreuung der parkenden Fahrzeuge stark behindert, sodass ggf. das erhöhte Risiko besteht, dass dieser Radfahrer nicht oder zu spät erkannt wird. In diesem Zusammenhang kann das Verfahren ferner auch ein Festlegen des ersten Umfeldbereichs 3a und/oder des zweiten Umfeldbereichs 3b in Abhängigkeit der ermittelten Objekte 4a, 4b, 4c und/oder einer ermittelten Umfeldsituation umfassen. Insgesamt kann dadurch auf vorteilhafte Weise ein zuverlässiges Erkennen von Fußgängern und/oder Radfahrern beim Abbiegen realisiert werden, die ansonsten gegebenenfalls durch die Präsenz bestimmter stationärer Objekte im Umfeld 3 des Kraftfahrzeugs 20 nur schwer erfasst bzw. verdeckt werden würden.

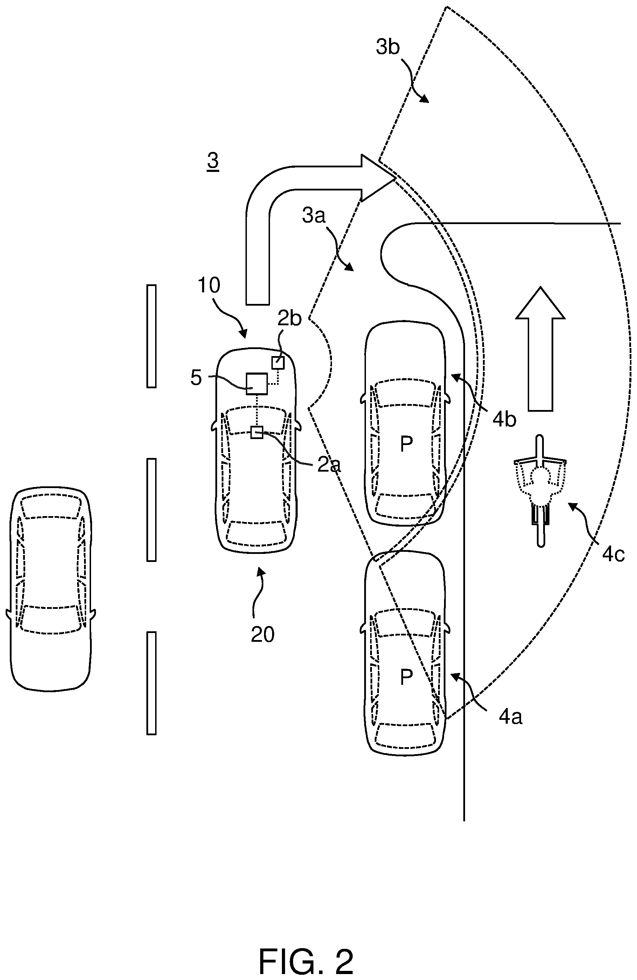

Figur 2 zeigt eine schematische Darstellung eines Abbiegevorgang eines Kraftfahrzeugs 20 mit einem Abbiegeassistenzsystem 10 gemäß einer Ausführung der Erfindung. Lediglich beispielhaft handelt es sich bei dem Kraftfahrzeug 20 hierbei um einen linksgelenkten Personenkraftwagen, welcher in der vorliegend dargestellten Situation nach rechts abbiegt und hierbei möglicherweise mit einem im Umfeld 3 des Kraftfahrzeugs 20 befindlichen Radfahrer 4c - der möglicherweise für den Fahrer des Kraftfahrzeugs 20 durch die am Fahrbahnrand parkenden Fahrzeuge 4a und 4b verdeckt wird - kollidieren könnte.

Um einen derartigen Zusammenstoß zu vermeiden, umfasst das vorgenannte Kraftfahrzeug 20 ein Abbiegeassistenzsystem 10, welches z. B. ausgebildet sein kann, den Fahrer optisch und/oder akustisch zu warnen und/oder gezielt in die Fahrzeugführung (automatisches Bremsen) einzugreifen, falls das Kraftfahrzeug 20 beim Abbiegen einen anderen Verkehrsteilnehmer (z. B. einen Fußgänger und/oder Radfahrer) gefährden würde. Hierbei umfasst das Kraftfahrzeug 20 bzw. das Abbiegeassistenzsystem 10 eine erste Sensoreinrichtung 2a zur Umfelderfassung, die vorliegend beispielhaft als Bilderfassungseinrichtung ausgebildet ist, und eine zweite Sensoreinrichtung 2b zur Umfelderfassung, die vorliegend beispielhaft als Radareinrichtung ausgebildet ist. Weiterhin umfasst das Kraftfahrzeug 20 bzw. das Abbiegeassistenzsystem 10 eine Steuereinrichtung 5, die über entsprechende Leitungen in Signalverbindung mit den beiden Sensoreinrichtungen 2a und 2b steht und ausgebildet ist, Objekte (hier z. B. Objekte 4a, 4b, 4c) im Umfeld 3 des Kraftfahrzeugs 20 auf Basis von ersten Umfelddaten zu ermitteln, die von der ersten Sensoreinrichtung 2a erfasst werden. Bei der Objektermittlung bzw. Objekterkennung können hierbei ggf. auch Umfelddaten weiterer (nicht dargestellter) Sensoreinrichtung und/oder Umfelddaten der zweiten Sensoreinrichtung 2b verwendet werden. Falls dabei zumindest ein vorbestimmter, d. h. zuvor festgelegter, stationärer Objekttyp (hier z. B. ein parkendes Fahrzeug) in einem vorbestimmten ersten Umfeldbereich 3a des Umfelds 3 des Kraftfahrzeugs 20 ermittelt wird, kann die Steuereinrichtung 5 ferner dazu ausgebildet sein, wenigstens einer Detektionseigenschaft der zweiten Sensoreinrichtung 2b bezüglich eines vorbestimmten zweiten Umfeldbereichs 3b des Umfelds 3 des Kraftfahrzeugs 20 anzupassen. Beispielsweise kann es sich dann bei dem Anpassen der wenigstens einen Detektionseigenschaft der zweiten Sensoreinrichtung 2b um ein Erhöhen der Detektionswahrscheinlichkeit für dynamische Objekte (z. B. Fußgänger und/oder Radfahrer) im zweiten Umfeldbereich 3b handeln. Anders ausgedrückt kann - falls wie hier ein parkendes Fahrzeug 4b im ersten Umfeldbereich 3a ermittelt wird - die Wahrscheinlichkeit, mit der ein sich bewegendes Objekt im zweiten Umfeldbereich 3b erfasst wird, gesteigert werden. Dies kann z. B. durch ein Anpassen entsprechender Schwellenwerte der zweiten Sensoreinrichtung 2b und/oder der zugehörigen Auswerteeinrichtung (hier in Form der Steuereinrichtung 5) erfolgen.

Wie weiterhin in Figur 2 gezeigt, handelt es sich bei dem ersten Umfeldbereich 3a lediglich beispielhaft um einen beifahrerseitigen Seiten-Nahbereich des Kraftfahrzeugs 20 und bei dem zweiten Umfeldbereich 3b um einen bezüglich der zweiten Sensoreinrichtung 2b weiter entfernten - und damit aus Sicht des Fahrers hinter dem parkenden Fahrzeug 4b liegenden - beifahrerseitigen Seitenbereich des Kraftfahrzeugs 20. Wie vorstehend erwähnt, sind dabei jedoch auch andere Lagen, Anordnungen und/oder Größen der beiden Bereiche 3a und 3b möglich ohne den Bereich der Erfindung zu verlassen. Beispielsweise kann die Position des ersten und/oder zweiten Umfeldbereichs 3a, 3b mit dem abbiegenden Kraftfahrzeugs 20 mitgeführt werden oder räumlich fest sein und/oder in Abhängigkeit der zuvor ermittelten Objekttypen im Umfeld 3 des Kraftfahrzeugs 20 festgelegt werden. So kann der erste Umfeldbereich 3a beispielsweise in Bereich zwischen einer vom Kraftfahrzeug 20 befahrenen Fahrbahn und einer von der ersten Sensoreinrichtung 2a (ggf. unter Berücksichtigung von Kartendaten) erfassten Radverkehrsanlage in der Umgebung des Kraftfahrzeugs 20 sein. Weiterhin können der erste und zweite Umfeldbereich 3a, 3b räumlich überlappen oder aber räumlich disjunkt sein. Auf vorteilhafte Weise kann durch das vorstehend beschriebene Abbiegeassistenzsystem 10 das Erkennen und damit die Sicherheit des, gegebenenfalls durch das parkende Fahrzeug 4b verdeckten, Radfahrers 4c beim Abbiegen des Kraftfahrzeugs 20 erhöht werden.

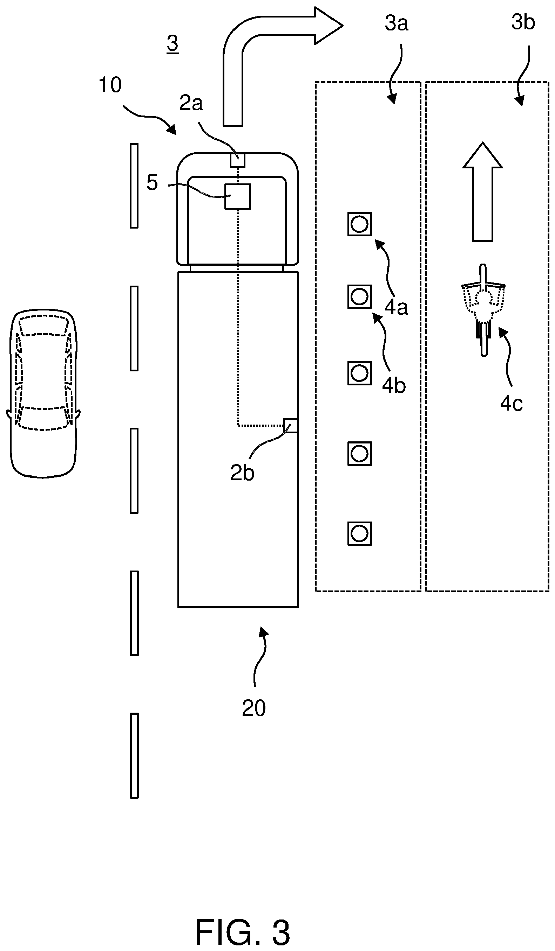

Figur 3 zeigt eine schematische Darstellung eines Abbiegevorgangs eines Kraftfahrzeugs 20 mit einem Abbiegeassistenzsystem 10 gemäß einer weiteren Ausführung der Erfindung. Im Gegensatz zu dem in Figur 2 gezeigten Fall handelt es sich bei dem Kraftfahrzeug 20 hier nun um eine linksgelenkte Sattelzugmaschine mit angehängtem Sattelauflieger, wobei vorliegend das Kraftfahrzeug 20 wiederum nach rechts abbiegt und hierbei möglicherweise mit einem im Umfeld 3 des Kraftfahrzeugs 20 befindlichen Radfahrer 4c kollidieren könnte. Dies wird in der vorliegend gezeigten Situation möglicherweise auch dadurch bedingt, dass ein Erkennen des Radfahrers 4c für den Fahrer des Kraftfahrzeugs 20 durch die im beifahrerseitigen Seitenbereich des Kraftfahrzeugs 20 vorhandenen Leitbarken 4a, 4b und/oder weitere nicht explizit dargestellte Absperrgeräte eines Baustellenbereichs behindert bzw. erschwert wird. Um das Risiko einer Gefährdung des Radfahrers 4c möglichst zu minimieren, umfasst das Kraftfahrzeug 20 hier erneut ein erfindungsgemäßes Abbiegeassistenzsystem 10, dessen einzelne Komponenten bereits vorstehend eingehend beschrieben wurden.

Im Gegensatz zu der vorstehend im Zusammenhang mit einem PKW beschriebenen Ausführungsform ist die zweite Sensoreinrichtung 2b hierbei allerdings an einem Anhänger (Sattelauflieger) des Kraftfahrzeugs 20 und damit räumlich deutlich getrennt von der an der Sattelzugmaschine angeordneten ersten Sensoreinrichtung 2a angebracht. Der Vorteil dieser Variante liegt darin, dass der Anhänger in der Anfangsphase des Abbiegevorgangs weniger Querbewegungen unterliegt und damit ein zuverlässiges Überwachen des Seitenbereichs des Kraftfahrzeugs 20 ermöglicht. Weiterhin handelt es sich in der gezeigten Ausführungsform bei den beiden vorbestimmten Umfeldbereichen 3a, 3b lediglich beispielshaft um - unabhängig von der Bewegung des Kraftfahrzeugs 20 - räumlich feststehende Bereiche.

### Bezugszeichenliste

- 1a, 1b, 1c: Bilderfassungseinrichtung
- 2a: Erste Sensoreinrichtung
- 2b: Zweite Sensoreinrichtung
- 3: Umfeld des Kraftfahrzeugs
- 3a: Erster Umfeldbereich
- 3b: Zweiter Umfeldbereich
- 4a, 4b, 4c: Objekt im Umfeld des Kraftfahrzeugs
- 5: Steuereinrichtung
- 10: Abbiegeassistenzsystems
- 20: Kraftfahrzeug

## Patentansprüche

1. Verfahren zum Betrieb eines Abbiegeassistenzsystems (10) für ein Kraftfahrzeug (20), umfassend eine erste Sensoreinrichtung (2a) zur Umfelderfassung und eine zweite Sensoreinrichtung (2b) zur Umfelderfassung; aufweisend die Schritte:
- Erfassen erster Umfelddaten des Kraftfahrzeugs (20) mittels der ersten Sensoreinrichtung (2a); und
- Ermitteln von Objekten (4a, 4b, 4c) im Umfeld (3) des Kraftfahrzeugs (20) auf Basis der erfassten ersten Umfelddaten;
**dadurch gekennzeichnet, dass**
- falls zumindest ein vorbestimmter stationärer Objekttyp in einem vorbestimmten ersten Umfeldbereich (3a) des Umfelds (3) des Kraftfahrzeugs (20) ermittelt wird, Anpassen wenigstens einer Detektionseigenschaft der zweiten Sensoreinrichtung (2b) bezüglich eines vorbestimmten, von der zweiten Sensoreinrichtung (2b) weiter als der erste Umfeldbereich (3a) entfernten, zweiten Umfeldbereichs (3b) des Umfelds (3) des Kraftfahrzeugs (20), wobei der erste Umfeldbereich (3a) zumindest abschnittsweise einen seitlich neben dem Kraftfahrzeug (20) befindlichen Raumbereich umfasst.

2. Verfahren nach Anspruch 1, **dadurch gekennzeichnet, dass** das Anpassen der wenigstens einen Detektionseigenschaft ein Erhöhen einer Detektionswahrscheinlichkeit und/oder einer Sensitivität für dynamische Objekte im zweiten Umfeldbereich (3b) umfasst.

3. Verfahren nach einem der vorherigen Ansprüche, **dadurch gekennzeichnet, dass** die zweite Sensoreinrichtung (2b) eine Radareinrichtung ist und das Anpassen der wenigstens einen Detektionseigenschaft ein Ändern einer räumlichen Verteilung, einer Frequenz und/oder einer Amplitude eines abgestrahlten Radarsignals umfasst.

4. Verfahren nach Anspruch 3, **dadurch gekennzeichnet, dass** der zumindest eine vorbestimmte stationäre Objekttyp ein parkendes Fahrzeug ist und das Anpassen der wenigstens einen Detektionseigenschaft ein Reduzieren der Amplitude des von der Radareinrichtung abgestrahlten Radarsignals und/oder ein Priorisieren eines Erfassens von Objekten (4a, 4b, 4c), die eine geringere Rückstreuung als das zumindest eine parkende Fahrzeug aufweisen, umfasst.

5. Verfahren nach einem der vorherigen Ansprüche, **dadurch gekennzeichnet, dass** das Verfahren nur im Falle eines aktuellen, anstehenden und/oder geplanten Abbiegevorgangs des Kraftfahrzeugs (20) durchgeführt wird.

6. Verfahren nach einem der vorherigen Ansprüche, **dadurch gekennzeichnet,**
a) **dass** der erste Umfeldbereich (3a) ein Seiten-Nahbereich des Umfelds des Kraftfahrzeugs (20) ist; und/oder
b) **dass** der erste Umfeldbereich (3a) zwischen dem zweiten Umfeldbereich (3b) und der zweiten Sensoreinrichtung (2b) angeordnet ist; und/oder
c) **dass** der zweite Umfeldbereich (3b) einen größeren Abstand zur zweiten Sensoreinrichtung (2b) aufweist als der erste Umfeldbereich (3a); und/oder
d) **dass** der zweite Umfeldbereich (3b) einen Bereich außerhalb der vom Kraftfahrzeug (20) befahrenen Fahrbahn umfasst.

7. Verfahren nach einem der vorherigen Ansprüche, **dadurch gekennzeichnet, dass** der zumindest eine vorbestimmte stationäre Objekttyp ein parkendes Fahrzeug, eine Bepflanzung, ein Baum, eine Litfaßsäule, ein Strom- oder Telefonmast, ein Verkehrsschild, eine Leitbarke, und/oder eine Schutzplanke ist.

8. Verfahren nach einem der vorherigen Ansprüche, **dadurch gekennzeichnet, dass** die zweite Sensoreinrichtung (2b) in zumindest zwei verschiedene Betriebsmodi M₁, M₂, betreibbar ist, die sich in wenigstens einer Detektionseigenschaft bezüglich dem vorbestimmten zweiten Umfeldbereich (3b) des Umfelds (3) des Kraftfahrzeugs (20) unterscheiden, und wobei das Anpassen ein Festlegen eines aktuellen Betriebsmodus Mₐₖₜ aus den zumindest zwei Betriebsmodi M₁, M₂ umfasst.

9. Verfahren nach Anspruch 8, **dadurch gekennzeichnet, dass** der festgelegte aktuelle Betriebsmodus Mₐₖₜ auf das Erkennen dynamischer Objekte ausgelegt ist.

10. Verfahren nach einem der vorherigen Ansprüche, **dadurch gekennzeichnet, dass**
a) die erste Sensoreinrichtung (2a) eine Bilderfassungseinrichtung ist oder mehrere Bilderfassungseinrichtungen umfasst; und/oder
b) die erste Sensoreinrichtung (2a) ausgebildet ist, einen vorderen, seitlichen Umfeldbereich auf der Beifahrerseite des Kraftfahrzeugs (20) zu erfassen; und/oder
c) die erste Sensoreinrichtung (2a) und zweite Sensoreinrichtung (2b) auf einem unterschiedlichen Messprinzip beruhen.

11. Abbiegeassistenzsystem (10) für ein Kraftfahrzeug (20), das eingerichtet ist, ein Verfahren nach einem der vorherigen Ansprüche durchzuführen.

12. Kraftfahrzeug (20), aufweisend ein Abbiegeassistenzsystem (10) nach Anspruch 11.

13. Kraftfahrzeug (20) nach Anspruch 12, **dadurch gekennzeichnet, dass** die erste Sensoreinrichtung (2a) am Kraftfahrzeug (20) angeordnet ist und die zweite Sensoreinrichtung (2b) an einem mit dem Kraftfahrzeug (20) verbundenen Anhänger (21) angeordnet ist.

14. Kraftfahrzeug (20) nach Anspruch 13, **dadurch gekennzeichnet, dass** das Kraftfahrzeug (20) eine Sattelzugmaschine und der Anhänger ein Sattelauflieger ist.

## Claims

1. Method for operating a turning assistance system (10) for a motor vehicle (20), comprising a first sensor device (2a) for environment detection and a second sensor device (2b) for environment detection; comprising the steps:
- detecting first environment data of the motor vehicle (20) by means of the first sensor device (2a); and
- determining objects (4a, 4b, 4c) in the environment (3) of the motor vehicle (20) on the basis of the detected first environment data;
**characterized in that**
- if at least one predetermined stationary object type is determined in a predetermined first environment region (3a) of the environment (3) of the motor vehicle (20), adapting at least one detection property of the second sensor device (2b) with respect to a predetermined second environment region (3b) of the environment (3) of the motor vehicle (20) which is further away from the second sensor device (2b) than the first environment region (3a), wherein the first environment region (3a) at least in sections comprises a spatial region situated laterally next to the motor vehicle (20).

2. Method according to claim 1, **characterized in that** the adapting of the at least one detection property comprises increasing a detection probability and/or a sensitivity for dynamic objects in the second environment region (3b).

3. Method according to one of the preceding claims, **characterized in that** the second sensor device (2b) is a radar device and the adapting of the at least one detection property comprises changing a spatial distribution, a frequency and/or an amplitude of an emitted radar signal.

4. Method according to claim 3, **characterized in that** the at least one predetermined stationary object type is a parked vehicle and the adapting of the at least one detection property comprises reducing the amplitude of the radar signal emitted by the radar device and/or prioritizing a detecting of objects (4a, 4b, 4c) which have a lower backscattering than the at least one parked vehicle.

5. Method according to one of the preceding claims, **characterized in that** the method is only performed in the case of a current, imminent and/or planned turning operation of the motor vehicle (20).

6. Method according to one of the preceding claims, **characterized,**
a) **in that** the first environment region (3a) is a lateral near region of the environment of the motor vehicle (20); and/or
b) **in that** the first environment region (3a) is arranged between the second environment region (3b) and the second sensor device (2b); and/or
c) **in that** the second environment region (3b) has a greater distance from the second sensor device (2b) than the first environment region (3a); and/or
d) **in that** the second environment region (3b) comprises a region outside the roadway travelled by the motor vehicle (20).

7. Method according to one of the preceding claims, **characterized in that** the at least one predetermined stationary object type is a parked vehicle, a plantation, a tree, an advertising column, a power or telephone pole, a traffic sign, a traffic beacon, and/or a crash barrier.

8. Method according to one of the preceding claims, **characterized in that** the second sensor device (2b) is operable in at least two different operating modes M₁, M₂, which differ in at least one detection property with respect to the predetermined second environment region (3b) of the environment (3) of the motor vehicle (20), and wherein the adapting comprises defining a current operating mode Mₐₖₜ from the at least two operating modes M₁, M₂.

9. Method according to claim 8, **characterized in that** the defined current operating mode Mₐₖₜ is designed for recognizing dynamic objects.

10. Method according to one of the preceding claims, **characterized in that**
a) the first sensor device (2a) is an image capture device or comprises a plurality of image capture devices; and/or
b) the first sensor device (2a) is designed to detect a front, lateral environment region on the passenger side of the motor vehicle (20); and/or
c) the first sensor device (2a) and second sensor device (2b) are based on a different measurement principle.

11. Turning assistance system (10) for a motor vehicle (20), which is configured to perform a method according to one of the preceding claims.

12. Motor vehicle (20), having a turning assistance system (10) according to claim 11.

13. Motor vehicle (20) according to claim 12, **characterized in that** the first sensor device (2a) is arranged on the motor vehicle (20) and the second sensor device (2b) is arranged on a trailer (21) connected to the motor vehicle (20).

14. Motor vehicle (20) according to claim 13, **characterized in that** the motor vehicle (20) is a semi-trailer tractor and the trailer is a semi-trailer.

## Revendications

1. Procédé pour faire fonctionner un système d'assistance au virage (10) pour un véhicule automobile (20), comprenant un premier dispositif de capteur (2a) pour la détection d'environnement et un deuxième dispositif de capteur (2b) pour la détection d'environnement ; présentant les étapes :
- détection de premières données d'environnement du véhicule automobile (20) au moyen du premier dispositif de capteur (2a) ; et
- détermination d'objets (4a, 4b, 4c) dans l'environnement (3) du véhicule automobile (20) sur la base des premières données d'environnement détectées ;
**caractérisé en ce que**
- si au moins un type d'objet stationnaire prédéterminé est déterminé dans une première zone d'environnement prédéterminée (3a) de l'environnement (3) du véhicule automobile (20), adaptation d'au moins une propriété de détection du deuxième dispositif de capteur (2b) par rapport à une deuxième zone d'environnement prédéterminée (3b) de l'environnement (3) du véhicule automobile (20) qui est plus éloignée du deuxième dispositif de capteur (2b) que la première zone d'environnement (3a), dans lequel la première zone d'environnement (3a) comprend au moins par sections une zone spatiale située latéralement à côté du véhicule automobile (20).

2. Procédé selon la revendication 1, **caractérisé en ce que** l'adaptation de l'au moins une propriété de détection comprend une augmentation d'une probabilité de détection et/ou d'une sensibilité pour des objets dynamiques dans la deuxième zone d'environnement (3b).

3. Procédé selon l'une des revendications précédentes, **caractérisé en ce que** le deuxième dispositif de capteur (2b) est un dispositif radar et l'adaptation de l'au moins une propriété de détection comprend une modification d'une distribution spatiale, d'une fréquence et/ou d'une amplitude d'un signal radar émis.

4. Procédé selon la revendication 3, **caractérisé en ce que** l'au moins un type d'objet stationnaire prédéterminé est un véhicule stationné et l'adaptation de l'au moins une propriété de détection comprend une réduction de l'amplitude du signal radar émis par le dispositif radar et/ou une priorisation d'une détection d'objets (4a, 4b, 4c) qui présentent une rétrodif-fusion inférieure à celle de l'au moins un véhicule stationné.

5. Procédé selon l'une des revendications précédentes, **caractérisé en ce que** le procédé n'est exécuté que dans le cas d'une opération de virage actuelle, imminente et/ou planifiée du véhicule automobile (20).

6. Procédé selon l'une des revendications précédentes, **caractérisé,**
a) **en ce que** la première zone d'environnement (3a) est une zone latérale proche de l'environnement du véhicule automobile (20) ; et/ou
b) **en ce que** la première zone d'environnement (3a) est agencée entre la deuxième zone d'environnement (3b) et le deuxième dispositif de capteur (2b) ; et/ou
c) **en ce que** la deuxième zone d'environnement (3b) présente une distance plus grande par rapport au deuxième dispositif de capteur (2b) que la première zone d'environnement (3a) ; et/ou
d) **en ce que** la deuxième zone d'environnement (3b) comprend une zone en dehors de la chaussée empruntée par le véhicule automobile (20).

7. Procédé selon l'une des revendications précédentes, **caractérisé en ce que** l'au moins un type d'objet stationnaire prédéterminé est un véhicule stationné, une plantation, un arbre, une colonne Morris, un poteau électrique ou téléphonique, un panneau de signalisation, une balise de guidage, et/ou une glissière de sécurité.

8. Procédé selon l'une des revendications précédentes, **caractérisé en ce que** le deuxième dispositif de capteur (2b) peut fonctionner dans au moins deux modes de fonctionnement différents M₁, M₂, qui se distinguent par au moins une propriété de détection par rapport à la deuxième zone d'environnement prédéterminée (3b) de l'environnement (3) du véhicule automobile (20), et dans lequel l'adaptation comprend une détermination d'un mode de fonctionnement actuel Mₐₖₜ parmi les au moins deux modes de fonctionnement M₁, M₂.

9. Procédé selon la revendication 8, **caractérisé en ce que** le mode de fonctionnement actuel déterminé Mₐₖₜ est conçu pour la reconnaissance d'objets dynamiques.

10. Procédé selon l'une des revendications précédentes, **caractérisé en ce que**
a) le premier dispositif de capteur (2a) est un dispositif de capture d'image ou comprend plusieurs dispositifs de capture d'image ; et/ou
b) le premier dispositif de capteur (2a) est conçu pour détecter une zone d'environnement avant, latérale du côté passager du véhicule automobile (20) ; et/ou
c) le premier dispositif de capteur (2a) et le deuxième dispositif de capteur (2b) reposent sur un principe de mesure différent.

11. Système d'assistance au virage (10) pour un véhicule automobile (20), qui est configuré pour exécuter un procédé selon l'une des revendications précédentes.

12. Véhicule automobile (20), présentant un système d'assistance au virage (10) selon la revendication 11.

13. Véhicule automobile (20) selon la revendication 12, **caractérisé en ce que** le premier dispositif de capteur (2a) est agencé sur le véhicule automobile (20) et le deuxième dispositif de capteur (2b) est agencé sur une remorque (21) reliée au véhicule automobile (20).

14. Véhicule automobile (20) selon la revendication 13, **caractérisé en ce que** le véhicule automobile (20) est un tracteur routier et la remorque est une semi-remorque.
